# EUROPÄISCHE PATENTSCHRIFT

(11) **EP 0 600 178 B1**
(45) Veröffentlichungstag und Bekanntmachung des Hinweises auf die Patenterteilung: **21.05.1997**
(21) Anmeldenummer: 93115661.6
(22) Anmeldetag: 29.09.1993
(51) Int. Cl.: B60T 15/18

(54) **Anhänger-Steuerventil**
Trailer control valve
Valve de commande pour remorques

(30) Priorität: 28.11.1992 DE 4240093
(43) Veröffentlichungstag der Anmeldung: 08.06.1994
(73) Patentinhaber: WABCO STANDARD GmbH, D-53008 Bonn (DE)
(72) Erfinder: Ulrich, Helmut, D-31832 Springe (DE); Wolff, Hans-Klaus, D-31832 Springe (DE); Schulz, Hans-Joachim, D-30900 Wedemark (DE)
(74) Vertreter: Schrödter, Manfred, Dipl.-Ing.

(56) Entgegenhaltungen:
- EP-A- 0 157 945
- DE-A- 3 427 560
- DE-A- 3 813 417

## Beschreibung

Die Erfindung betrifft ein Anhänger-Steuerventil für eine druckluftbetätigte Zweileitungs-Bremsanlage gemäß dem Oberbegriff des Patentanspruchs 1.

Ein derartiges Anhänger-Steuerventil ist aus der DE 34 27 560 A1 bekannt.

Das in dieser Schrift gezeigte und beschriebene Ahänger-Steuerventil weist eine mittels eines Steuerkolbens betätigbare, aus einer ungedrosselten Betriebsstellung heraus zu kleineren Durchlaßquerschnitten hin veränderbare Drossel auf. Der Steuerkolben wird einerseits vom Steuerdruck des Anhänger-Steuerventils und andererseits im wesentlichen von dem hinter der Drossel anstehenden Vorratsdruck so beaufschlagt, daß die das Anhänger-Steuerventil speisende Vorratsleitung des Zugfahrzeugs bei einem Bruch der Anhänger-Bremsleitung gedrosselt wird. Die so erreichte Drosselung des Druckluftdurchsatzes durch die erwähnte Vorratsleitung bewirkt eine Entlüftung des der Drossel nachgeschalteten und die Anhänger-Vorratsleitung speisenden Teiles dieser Vorratsleitung und ermöglicht somit mittels eines entsprechend reagierenden Anhänger-Bremsventils an dem Anhängerfahrzeug eine schnelle automatische Bremsung des Anhängerfahrzeugs beim Bruch der Anhänger-Bremsleitung.

Bei ungünstigen Nachströmbedingungen, wie sie z. B. vorhanden sind bei einem Anhänger-Steuerventil, dessen Durchlaßöffnung zur Anhänger-Bremsleitung kleiner ist als der Leitungsquerschnitt der Anhänger-Bremsleitung, ist es nicht ganz auszuschließen, daß in der vom Steuerkolben für die Drossel begrenzten, mit dem Versorgungsdruck des Zugfahrzeugs gespeisten Steuerkammer, auch bei intakter Anhänger-Bremsleitung bei jeder Bremsbetätigung der Druck in der Druckmitteleingangskammer des Anhänger-Steuerventils und somit auch in besagter Steuerkammer der Drosseleinrichtung so weit absinkt, daß der Steuerkolben von dem entgegengerichtet auf ihn einwirkenden Druck aus der Steuerkammer des Anhänger-Steuerventils in Richtung einer Verringerung des Durchlaßquerschnitts der Drossel bewegt wird, woraus eine unbeabsichtigte Drosselung des Druckmittelstromes zur Anhänger-Vorratsleitung hin resultiert.

Der Erfindung liegt die Aufgabe zugrunde, ein Anhänger-Steuerventil der eingangs erwähnten Art zu schaffen, bei welchem eine Fehlfunktion der Drosseleinrichtung, insbesondere eine unbeabsichtigte Drosselung des Vorratsdruckes, ausgeschlossen ist.

Diese Aufgabe wird mit der im Patentanspruch 1 angegebenen Erfindung gelöst. Weiterbildungen und vorteilhafte Ausgestaltungen der Erfindung werden in den Unteransprüchen aufgezeigt.

Die Erfindung bietet insbesondere den Vorteil, daß eine unbeabsichtigte Drosselung des Vorratsdruckes während einer Betriebsbremsung bei intakter Bremsanlage ausgeschlossen ist. Durch den verlangsamten Druckaufbau in der vom Steuerkolben begrenzten zweiten Steuerkammer wird die Drossel erst dann in eine ihren Durchlaßquerschnitt verringernde Stellung gebracht, wenn der Druck in der Druckmitteleingangskammer des Anhänger-Steuerventils sich über einen Zeitraum auf einem unter seinem Normalniveau liegenden Niveau hält, der nicht durch eine Bremsung bei intakter Bremsanlage bestimmt worden sein kann. Der verlangsamte Druckaufbau in der vom Steuerkolben begrenzten zweiten Steuerkammer wird dadurch erreicht, daß in der Verbindungsleitung zwischen der ersten Steuerkammer der Drossel und der Steuerkammer des Anhänger-Steuerventils eine zweite Drossel angeordnet ist.

Der Steuerkolben für die erste Drossel wird direkt oder indirekt von einer Feder im Sinne einer Verringerung des Durchlaßquerschnittes der ersten Drossel belastet. Durch diese Maßnahme ist sichergestellt, daß bei defekter Anhänger-Bremsleitung das Drosselglied der ersten Drossel auch dann in eine ihren Durchlaßquerschnitt verringernde Stellung gelangt, wenn der Steuerdruck gleich dem oder kleiner als der Druck in der Druckmitteleingangskammer des Anhänger-Steuerventils ist.

Das erfindungsgemäße Anhänger-Steuerventil läßt sich zudem auch dann einsetzen, wenn die Bremsanlage des Zugfahrzeugs und die Bremsanlage des Anhängerfahrzeugs mit Drücken unterschiedlichen Druckniveaus betrieben werden.

Vorteilhafterweise ist zwischen dem Steuerkolben für die erste Drossel und der zweiten Drossel eine als Zusatzvolumen zur Aufnahme des von der zweiten Drossel kommenden Steuerdruckes für den Steuerkolben der ersten Drossel dienende Kammer vorgesehen.

In vorteilhafter Weise ist das Drosselglied der zweiten Drossel so ausgebildet und so zum Steuerkolben der ersten Drossel angeordnet, daß die Kraft der Feder mittels des Drosselgliedes der zweiten Drossel auf den Steuerkolben der ersten Drossel übertragen wird.

Die Drossel ist in vorteilhafter Weise als eine vom Druckmittel aus der Steuerkammer des Anhänger-Steuerventils schaltbare Drossel ausgebildet.

Anhand der Zeichnung wird nachstehend ein Ausführungsbeispiel der Erfindung näher erläutert.

Es zeigen:
- Figur 1: ein Anhänger-Steuerventil für eine Zweikreis-Zweileitungsbremsanlage mit integrierter schaltbarer Drosseleinrichtung und
- Figur 2: ein Anhänger-Steuerventil für eine Zweikreis-Zweileitungsbremsanlage gemäß Figur 1 in einer Ansicht, in der die Druckmittelanschlüsse des Anhänger-Steuerventils dargestellt sind, jedoch die Drosseleinrichtung durch das Anhänger-Steuerventil verdeckt ist.

In einem von einem Deckel (1) verschlossenen Ventilgehäuse (6) sind ein erster Relaiskolben (3) und ein zweiter Relaiskolben (5) in Richtung der Längsachse des Ventilgehäuses (6) abgedichtet verschiebbar angeordnet. Der zweite Relaiskolben (5) wird im ersten Relaiskolben (3) abgedichtet verschiebbar geführt. Der erste Relaiskolben (3) und der zweite Relaiskolben (5) bilden eine Baueinheit und trennen eine Steuerkammer (2) von einer Druckmittelausgangskammer (10). Die Steuerkammer (2) ist über einen nicht dargestellten Steueranschluß mit einem ersten Bremskreis des Motorfahrzeugs verbunden. Über einen als Druckmittelausgang dienenden, nicht dargestellten Druckmittelanschluß steht die Druckmittelausgangskammer (10) mit einer zum Anhänger-Bremsventil eines Anhängerfahrzeugs führenden Anhänger-Bremsleitung in Verbindung. Die aus dem ersten Relaiskolben (3) und zweiten Relaiskolben (5) bestehende Baueinheit wird von einer am zweiten Relaiskolben (5) angreifenden Feder (7) in Richtung auf die Steuerkammer (2) zu belastet.

Die aus dem ersten Relaiskolben (3) und dem zweiten Relaiskolben (5) bestehende Baueinheit enthält eine Einrichtung (4), mittels welcher bei Einleitung eines Bremsvorganges eine Voreilung des Druckaufbaus in der Bremsanlage des Anhängerfahrzeugs bewirkt wird. Durch den zweiten Relaiskolben (5) wird sichergestellt, daß bei einem Defekt im ersten Bremskreis die Funktion des Anhänger-Steuerventils noch sichergestellt ist.

Der Einfachheit halber wird nachfolgend die aus dem ersten Relaiskolben (3) und dem zweiten Relaiskolben (5) bestehende Baueinheit als Relaiskolben (3, 5) bezeichnet.

Unterhalb des Relaiskolbens (3, 5) ist eine aus einem ersten Steuerkolbenteil (9, 20) und einem zweiten Steuerkolbenteil (18) bestehende Steuerkolbeneinheit (9, 18) angeordnet, wobei die beiden Steuerkolbenteile (9) und (18) fest miteinander verbunden sind. Zur Verbindung der beiden Steuerkolbenteile (9) und (18) dient ein rohrförmiger Fortsatz (20) des ersten Steuerkolbenteils (9), welcher sich durch eine Öffnung in einer Gehäusewand hindurch in Richtung auf einen zur Atmosphäre führenden Druckmittelauslaß (22) des Ventilgehäuses (1) zu erstreckt. Das erste Steuerkolbenteil (9) begrenzt mit seiner dem Relaiskolben (3, 5) zugewandten Seite die Druckmittelausgangskammer (10) und mit seiner dem Relaiskolben (3, 5) abgewandten Seite eine Druckmitteleingangskammer (59, 15). Die dem ersten Steuerkolbenteil (9) abgewandte Seite der Gehäusewand begrenzt zusammen mit der der Gehäusewand zugewandten Seite des zweiten Steuerkolbenteiles (18) eine Druckmittelkammer (17), die über einen nicht dargestellten Druckmittelanschluß mit einem Handbremsventil des Zugfahrzeugs verbunden ist.

Das erste Steuerkolbenteil (9) trägt auf seinem Umfang einen Dichtring (13) und das zweite Steuerkolbenteil (18) trägt auf seinem Umfang einen Dichtring (19). Die Dichtringe (13) und (19) liegen dichtend an der Innenwand des Gehäuses (6) an, so daß zwischen der Druckmitteleingangskammer (59, 15) und der Druckmittelausgangskammer (10) kein Austausch von Druckmittel stattfinden kann und von der Druckmittelkammer (17) kein Druckmittel zum Druckmittelauslaß (22) gelangen kann. Selbstverständlich ist auch zwischen der die Durchgangsöffnung in der Gehäusewand begrenzenden Wandung und der Umfangsfläche des rohrförmigen Fortsatzes (20) des ersten Steuerkolbenteiles (9) ein Dichtring vorgesehen, welcher einen Druckmittelaustausch zwischen dem Druck der Druckmittelkammer (17) und dem Druck der Druckmitteleingangskammer (58, 15) verhindert.

Im ersten Steuerkolbenteil (9) ist zentrisch eine Ausnehmung vorgesehen, in welcher ein als Ventilsitz (11) ausgebildeter ringförmiger Körper angeordnet ist. Ein als Ventilglied (12, 14) ausgebildetes rohrförmiges Teil wird im rohrförmigen Fortsatz (20) des ersten Steuerkolbenteils (9) abgedichtet verschiebbar geführt und mittels einer Feder (16) unter Zwischenschaltung eines Federtellers in Richtung auf den Ventilsitz (11) zu belastet. Der Relaiskolben (3, 5) besitzt auf seiner dem ersten Steuerkolbenteil (9) zugewandten Seite einen rohrförmigen Fortsatz, der an seinem freien Ende als Ventilsitz (8) ausgebildet ist. Der Ventilsitz (11) und das Ventilglied (12, 14) bilden ein Einlaßventil (11, 12, 14), und der Ventilsitz (8) bildet mit dem Ventilglied (12, 14) ein Auslaßventil eines kombinierten Einlaß- und Auslaßventils (11, 12, 14, 8). Über das Einlaßventil (11, 12, 14) ist die Druckmittelausgangskammer (10) mit der Druckmitteleingangskammer (59, 15) und über das Auslaßventil (12, 14, 8) ist die Druckmittelausgangskammer (10) über einen Durchlaß (21) im rohrförmigen Fortsatz (20) des ersten Steuerkolbenteiles (9) mit dem Druckmittelauslaß (22) verbindbar.

In einem zweiten Gehäuse (53), welches einstückig mit dem Gehäuse (6) ausgebildet ist, ist ein topfförmiges Teil (24, 27, 31, 34) angeordnet. Im Bereich seines Bodens (24) weist das topfförmige Teil (24, 27, 31, 34) einen sich radial nach außen erstreckenden ersten umlaufenden Vorsprung (27) und im Bereich seines sich vom Boden (24) weg erstreckenden Teiles weist das topfförmige Teil (24, 27, 31, 34) einen sich radial nach außen erstreckenden zweiten umlaufenden Vorsprung (31) auf. Der erste umlaufende Vorsprung (27) trägt auf seinem Umfang einen Dichtring (23), und der zweite umlaufende Vorsprung (31) trägt auf seinem Umfang einen Dichtring (32). Die beiden Dichtringe (23) und (32) liegen dichtend an der Innenwand des Gehäuses (53) an.

Mittels einer vor dem ersten umlaufenden Vorsprung (27) gelegenen Stufe in der den Gehäuseinnenraum begrenzenden Wand und einem hinter dem umlaufenden Vorsprung (27) angeordneten Sicherungsring wird das topfförmige Teil (24, 27, 31, 34) in axialer Richtung, und durch die beiden umlaufenden Vorsprünge (27) und (31) sowie die den Gehäuseinnenraum begrenzende Wand wird das topfförmige Teil (24, 27, 31, 34) in axialer und radialer Richtung im Gehäuseinnenraum fixiert. Von den einander zugewandten Seiten des ersten umlaufenden Vorsprungs (27) und des zweiten umlaufenden Vorsprungs (31) sowie der Innenwand des Gehäuses (53) und der äußeren Mantelfläche des zwischen den beiden umlaufenden Vorsprüngen (27) und (31) gelegenen Bereiches des topfförmigen Teiles (24, 27, 31, 34) wird eine Ringkammer (30) begrenzt, die über in der Wandung des topfförmigen Teiles vorgesehene Durchlässe (28, 29) mit einer vom Boden (24) und der Innenwand des topfförmigen Teiles (24, 27, 31, 34) begrenzten ersten Steuerkammer (26) in Verbindung steht. Über einen die Wand des Gehäuses (6) und des Gehäuses (53) durchdringenden Kanal (58) ist die Ringkammer (30) mit der Druckmitteleingangskammer (59, 15) des Anhänger-Steuerventils verbunden.

Ein ebenfalls topfförmig ausgebildeter Steuerkolben (41, 49) ist koaxial zum topfförmigen Teil (24, 27, 31, 34) im Gehäuse (53) in Richtung seiner Längsachse bewegbar angeordnet. Der Steuerkolben (41, 49) weist an seinem dem topfförmigen Teil (24, 27, 31, 34) abgewandten Endbereich einen sich radial nach außen erstreckenden umlaufenden Vorsprung auf. Der Vorsprung trägt einen Dichtring (42), welcher dichtend an der den Gehäuseinnenraum begrenzenden Wand anliegt. Der Steuerkolben (41, 49) besitzt an seinem dem topfförmigen Teil (24, 27, 31, 34) zugewandten Ende einen sich in das topfförmige Teil (24, 27, 31, 34) hinein erstreckenden, als Drosselglied (38) ausgebildeten rohrförmigen Fortsatz, dessen äußere Mantelfläche in Kontakt mit der Innenwand des freien Endbereiches des topfförmigen Teiles (24, 27, 31, 34) steht. Das Bodenteil (49) des Steuerkolbens (41, 49) begrenzt so mit seiner dem Boden (24) des topfförmigen Teiles (24, 27, 31, 34) zugewandten Seite die erste Steuerkammer (26). An der dem topfförmigen Teil (24, 27, 31, 34) zugewandten Stirnseite des Drosselgliedes (38) sind vorteilhafterweise im gleichen Abstand zueinander sich auf das topfförmige Teil (24, 27, 31, 34) zu erstreckende Vorsprünge (37) vorgesehen.

Die die erste Steuerkammer (26) begrenzende Innenwand des topfförmigen Teiles (24, 27, 31, 34) ist in ihrem dem Drosselglied (38) zugewandten freien Endbereich abgestuft ausgebildet. Die so gebildete Stufe dient als ein erster Anschlag (33) für das Drosselglied (38) und den Steuerkolben (41, 49) bei einer Bewegung in Richtung auf das topfförmige Teil (24, 27, 31, 34) zu. Auf der Höhe des Anschlags (33) ist in der Wand des Bereiches (34) des topfförmigen Teile (24, 27, 31, 34) eine Öffnung (36) vorgesehen, die an den von der Stirnseite und den Vorsprüngen (37) des Drosselgliedes (38, 37) sowie dem Anschlag (33) begrenzten Durchlaß (35) anschließt. Über den Durchlaß (35) und die Öffnung (36) ist die erste Steuerkammer (26) mit einer weiteren Druckmittelkammer (39) verbunden, die über einen Druckmittelanschluß (40) mit der Vorratsleitung des Zugfahrzeugs verbunden ist. Das Drosselglied (38, 37), der erste Anschlag (33) und der vom ersten Anschlag (33) und dem Drosselglied (38, 37) begrenzte Durchlaß (35) bilden eine aus einer ungedrosselten Betriebsstellung heraus zu kleineren Durchlaßquerschnitten hin veränderbare erste Drossel (38, 37, 33, 35).

Am Boden (24) des topfförmigen Teiles (24, 27, 31, 34) stützt sich eine Feder (25) mit ihrem einen Ende ab und beaufschlagt mit ihrem anderen Ende den Steuerkolben (41, 49) im Sinne einer Vergrößerung des Durchlaßquerschnittes (X) der ersten Drossel (38, 37, 33, 35). Der Steuerkolben (41, 49) liegt in der ungedrosselten Betriebsstellung der ersten Drossel (38, 37) mit seiner dem topfförmigen Teil (24, 27, 31, 34) abgewandten Seite an als zweiter Anschlag (50) dienenden Rippen an. Der zweite Anschlag (50) ist innerhalb einer Druckmittelkammer (60) gelegen, die einerseits von der der ersten Steuerkammer (26) abgewandten Seite des Steuerkolbens (41, 49) und andererseits von einer Gehäusewand (46) sowie einem zweiten Drosselglied (52, 48) begrenzt wird.

Das zweite Drosselglied (52, 48) erstreckt sich durch eine in der Gehäusewand (46) vorgesehene Öffnung hindurch in Richtung auf den Steuerkolben (41, 49) zu. Es weist einen umlaufenden Vorsprung (48) auf, der an parallel zur Längsachse des Gehäuses (53) verlaufenden Vorsprüngen der Gehäusewand (46) zur Anlage bringbar ist. Das zweite Drosselglied (52, 48) ist topfförmig ausgebildet und so im Gehäuse (53) angeordnet, daß es mit seiner offenen Seite zum Steuerkolben (49) hinweist. Von einer Feder (56), die sich an einem Federteller (54) abstützt, wird das zweite Drosselglied (52, 48) in Richtung auf den Steuerkolben (41, 49) zu belastet, wobei es mit seinem offenen Ende an einem deckelartigen Teil (45) des Steuerkolbens (41, 49) anliegt. Die Wand des zweiten Drosselgliedes (52, 48) weist einen Durchlaß (47) auf, der so zu der Gehäusewand (46) angeordnet ist, daß er in der einen Endlage des zweiten Drosselgliedes (52, 48) seinen größten Querschnitt hat und in der anderen Endlage des zweiten Drosselgliedes (52, 48) der überwiegende Teil des Durchlasses (47) von der Gehäusewand (46) abgedeckt ist, so daß der Durchlaß (47) seinen kleinsten Querschnitt hat.

Im deckelartigen Teil (45) des Steuerkolbens (41, 49) ist eine Öffnung (44) vorgesehen, über welche die Druckmittelkammer (60) mit einem als Zusatzvolumen dienenden Raum (43) im Steuerkolben (41, 49) verbunden ist. Die Druckmittelkammer (60) und das Zusatzvolumen (43) bilden eine zweite Steuerkammer (60, 43) für die Drosseleinrichtung. Auf der der zweiten Steuerkammer (60, 43) abgewandten Seite des zweiten Drosselgliedes (52, 48) ist eine Kammer (55) gelegen, die einerseits über einen Gehäusekanal (57) mit der Steuerkammer (2) des Anhänger-Steuerventils und andererseits über im äußeren Randbereich des umlaufenden Vorsprungs (48) des zweiten Drosselgliedes (52, 48) vorgesehene Ausnehmungen mit der zweiten Steuerkammer (60, 43) verbunden ist.

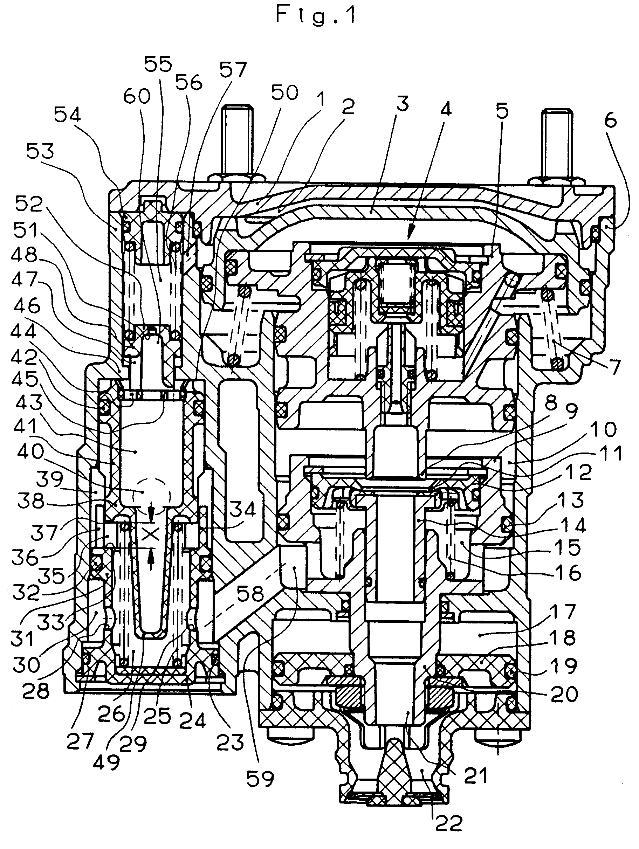

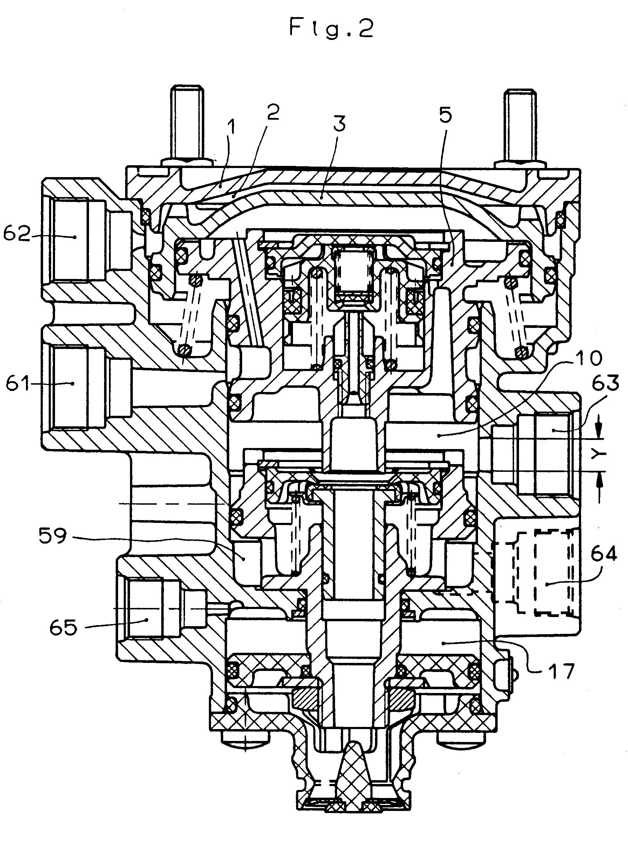

Figur 2 zeigt das in Figur 1 dargestellte Anhänger-Steuerventil, jedoch um seine Längsachse um 90 ° verdreht. Der besseren Übersicht halber sind die den in Figur 1 gezeigten Bauteilen gleichen Bauteile mit gleichen Bezugsziffern versehen.

Die vom ersten Relaiskolben (3, 5) begrenzte Steuerkammer (2) ist über einen Druckmittelanschluß (62) mit dem ersten Bremskreis des Zugfahrzeugs verbunden. Über einen Druckmittelanschluß (61) ist die vom zweiten Relaiskolben (5) begrenzte Steuerkammer mit dem zweiten Bremskreis des Zugfahrzeugs verbunden. Die Druckmittelausgangskammer (10) steht über einen Druckmittelanschluß (63) und eine Anhänger-Bremsleitung mit einem Anhängerbremsventil des Anhängerfahrzeugs in Verbindung. An einen mit der Druckmitteleingangskammer (59, 15) in Verbindung stehenden Druckmittelanschluß (64) ist eine Anhänger-Vorratsleitung angeschlossen. Die Druckmittelkammer (17) steht über einen Druckmittelanschluß (65) mit der Vorratsleitungen des Zugfahrzeugs in Verbindung.

Die Funktion des im vorstehenden beschriebenen Anhänger-Steuerventils wird nachfolgend näher erläutert.

Im Ruhezustand steht Vorratsdruckluft vom Zugfahrzeug über den Druckmittelanschluß (40) in der ersten Steuerkammer (26) der Drosseleinrichtung sowie über den Kanal (58) in der Druckmitteleingangskammer (59, 15) des Anhänger-Steuerventils und schließlich über den Druckmittelanschluß (64) in der Anhänger-Vorratsleitung an. Der Relaiskolben (3, 5) und der Steuerkolben (9, 18) des Anhänger-Steuerventils sowie der Steuerkolben (41, 49) der Drosseleinrichtung befinden sich in der gezeigten Stellung.

Bei Betätigung des Motorwagen-Bremsventils strömt Druckluft vom ersten Bremskreis des Zugfahrzeugs in die vom Relaiskolben (3, 5) begrenzte Steuerkammer (2) des Anhänger-Steuerventils. Der sich in der Steuerkammer (2) aufbauende Druck verschiebt den Relaikolben (3, 5) in Richtung auf den Steuerkolben (9, 18) zu. Dabei setzt der Ventilsitz (8) auf das Ventilglied (12) auf. Das Auslaßventil (8, 12) ist jetzt geschlossen und das Einlaßventil (11, 12) gelangt bei der weiteren Abwärtsbewegung des Relaiskolbens (3, 5) in die Offenstellung. Die in der ersten Steuerkammer (26) der Drosseleinrichtung und in der Druckmitteleingangskammer (59, 15) des Anhänger-Steuerventils anstehende Druckluft gelangt durch das geöffnete Einlaßventil (11, 12) des kombinierten Einlaß- und Auslaßventils (11, 12, 8) in die Druckmittelausgangskammer (10) und weiter durch den als Druckmittelausgang dienenden Druckmittelanschluß (63) und die Anhänger-Bremsleitung zum hier nicht gezeigten Anhängerbremsventil.

Der Steuerkolben (41, 49) der Drosseleinrichtung wird vom Vorratsdruck in der ersten Steuerkammer (26), in einer Stellung gehalten, in welcher die erste Drossel (38, 37, 36, 33, 35) unwirksam ist. Der Durchlaßquerschnitt (X) der ersten Drossel (38, 37, 36, 33, 35) hat jetzt sein größtmögliches Maß, d. h., die erste Drossel (38, 37, 36, 33, 35) befindet sich in ihrer ungedrosselten Betriebsstellung.

Über die von dem Gehäusekanal (57) und der Druckmittelkammer (55) der Drosseleinrichtung gebildete Verbindungsleitung zwischen der zweiten Steuerkammer (60, 43) der Drosseleinrichtung und der Steuerkammer (2) des Anhänger-Steuerventils, die Ausnehmungen im umlaufenden Vorsprung (48) des zweiten Drosselgliedes (52, 48) und den Durchlaß (47) der zweiten Drossel (52, 48, 47, 46) strömt Druckmittel von der Steuerkammer (2) für den Relaiskolben (3, 5) in die zweite Steuerkammer (60, 43) für den Steuerkolben (41, 49).

Der sich in der Druckmittelausgangskammer (10) des Anhänger-Steuerventils aufbauende Druck beaufschlagt die der Steuerkammer (2) des Anhänger-Steuerventils abgewandte Seite des Relaiskolbens (3, 5) und bewegt diesen gegen die vom Druck in der Steuerkammer (2) auf den Relaiskolben (3, 5) einwirkende, entgegengerichtete Kraft in Richtung auf die Steuerkammer (2) zu. Das Einlaßventil (11, 12) des kombinierten Einlaß- und Auslaßventils (11, 12, 8) gelangt in die Schließstellung, und eine Abschlußstellung ist erreicht.

Da der Druck in der Druckmitteleingangskammer (59, 15) des Anhänger-Steuerventils und somit auch der Druck in der mit der Druckmitteleingangskammer (59, 15) über den Kanal (58) verbundenen ersten Steuerkammer (26) der Drosseleinrichtung bei geöffneten Einlaßventil (11, 12) des kombinierten Einlaß- und Auslaßventils (11, 12, 8) für kurze Zeit absinkt, überwiegen während dieser Zeit die vom Steuerdruckmittel aus der Steuerkammer (2) des Anhänger-Steuerventils auf den Steuerkolben (41, 49) sowie die von der Feder (56) über das zweite Drosselglied (52, 48) auf den Steuerkolben (41, 49) ausgeübten Kräfte gegenüber der entgegengerichtet vom Druckmittel in der ersten Steuerkammer (26) auf den Steuerkolben (41, 49) einwirkenden Kraft. Das erste Drosselglied (38, 37) wird dann um einen geringen Betrag in Richtung auf die erste Steuerkammer (26) zu bewegt, wodurch jedoch keine nennenswerte Verringerung des Querschnittes des Durchlasses (35) der ersten Drossel (37, 36, 33, 35) bewirkt wird. Diese kurze Bewegung des Steuerkolbens wird gewünscht, um ein Kleben der Dichtringe zu vermeiden.

Da durch den das Drosselglied (52, 48) der zweiten Drossel (52, 48, 47, 46) beaufschlagenden Druck aus der Steuerkammer (2) des Anhänger-Steuerventils das zweite Drosselglied (52, 48) in eine Stellung gebracht wird, in welcher der umlaufende Vorsprung (48) des zweiten Drosselgliedes (52, 48) an den Erhöhungen der Gehäusewand (46) zur Anlage kommt, wird der Querschnitt des Durchlasses (47) der zweiten Drossel (52, 48, 47), so weit verringert, daß das Druckmittel aus der Steuerkammer (2) des Relaiskolbens nur verzögert in die zweite Steuerkammer (60, 43) des Steuerkolbens (41, 49) gelangen kann. Der sich in der zweiten Steuerkammer (60, 43) aufbauende Druck beaufschlagt, wie bereits erwähnt, das Drosselglied (52, 48) der zweiten Drossel (52, 48, 47, 46) auf der der Druckfeder (56) abgewandten Seite. Dadurch stellt sich bezüglich der Druckmittel ein Kräftgleichgewicht am Drosselglied (52, 48) der zweiten Drossel (52, 48, 47, 46) ein. Auf den Steuerkolben (41, 49) wirkt jetzt nur noch die über das zweite Drosselglied (52, 48) von der Feder (56) auf den Steuerkolben (41, 49) ausgeübte Kraft in Richtung auf die erste Steuerkammer (26) zu.

Da der Druck in der Druckmitteleingangskammer (59, 15) und somit auch in der ersten Steuerkammer (26) der Drosseleinrichtung nach dem kurzseitigen Absinken beim Öffnen des Einlaßventils (11, 12) des kombinierten Einlaß- und Auslaßventils (11, 12, 8) wieder ansteigt, erhöht sich auch wieder die vom Druck in der ersten Steuerkammer (26) auf den Steuerkolben (41, 49) einwirkende Kraft.

Ist der Druck in der Druckmitteleingangskammer (59, 15) des Anhänger-Steuerventils und somit auch der Druck in der ersten Steuerkammer (26) der Drosseleinrichtung soweit angestiegen, daß er eine auf den Steuerkolben (41, 49) einwirkende Kraft erzeugt, die größer ist als die von der Feder (56) und von dem Druckmittel in der zweiten Steuerkammer (60, 43) erzeugte und auf den Steuerkolben (41, 49) entgegengerichtet einwirkende Kraft, wird der Steuerkolben (41, 49) vom Druckmittel in der ersten Steuerkammer (26) in Richtung auf die zweite Steuerkammer (60, 43) zu verschoben. Das Drosselglied (38, 37) der ersten Drossel (38, 37, 33, 35) gelangt wieder in eine Stellung, in welcher die erste Drossel (38, 37, 33, 35) ihren größten Durchlaßquerschnitt hat. Da das Drosselglied (52, 48) der zweiten Drossel (52, 48, 47, 46) von der Feder (56) in Anlage am Steuerkolben (41, 49) gehalten wird, wird das Drosselglied (52, 48) der zweiten Drossel (52, 48, 47, 46) vom Steuerkolben (41, 49) gegen die Kraft der Feder (56) in seine Ausgangsstellung zurückgeschoben, in welcher die zweite Drossel (52, 48, 47, 46) ihren größten Durchlaßquerschnitt hat.

Wird eine Betriebsbremsung durchgeführt nachdem die Anhänger-Bremsleitung gerissen ist, oder reißt die Anhänger-Bremsleitung während einer Betriebsbremsung, so sinkt der Druck in der Druckmittelausgangskammer (10) sowie in der Druckmitteleingangskammer (59, 15) des Anhänger-Steuerventils und damit in der ersten Steuerkammer (26) der Drosseleinrichtung ab. Verursacht wird das Absinken des Druckes in den besagten Kammern dadurch, daß der Druck in der Druckmitteleingangskammer (59, 15) des Anhänger-Steuerventils sich über das Einlaßventil (11, 12) des kombinierten Einlaß- und Auslaßventil (11, 12, 8) sowie die Druckmittelausgangskammer (10) und die Bruchstelle an der Anhänger-Bremsleitung schnell abbaut. Da jetzt der vom Steuerdruck in der Steuerkammer (2) des Anhänger-Steuerventils und in der zweiten Steuerkammer (60, 43) der Drosseleinrichtung gegenüber dem Druck in der ersten Steuerkammer (26) der Drosseleinrichtung überwiegt, wird der Steuerkolben (41, 49) der Drosseleinrichtung nach unten, in Richtung auf die erste Steuerkammer (26) der Drosseleinrichtung zu verschoben. Das Drosselglied (38, 37) der ersten Drossel (38, 37, 33, 35) der Drosseleinrichtung kommt an dem Anschlag (33) zur Anlage. Die erste Drossel (38, 37, 33, 35) hat jetzt ihren kleinsten Durchlaßquerschnitt "X". Die weitere Belüftung der ersten Steuerkammer (26) und somit auch der über die Ringkammer (30) und den Kanal (58) mit dieser verbundenen Druckmitteleingangskammer (59, 15) des Anhänger-Steuerventils erfolgt jetzt nur noch gedrosselt über den verringerten Durchlaßquerschnitt der Öffnung (35) der ersten Drossel (38, 37, 33, 35). Jetzt kann Druckmittel aus der zum Anhängerfahrzeug führenden Vorratsleitung über das Einlaßventil (11, 12) des kombinierten Einlaß- und Auslaßventils (11, 12, 8) und die defekte Anhänger-Bremsleitung entweichen. Die erste Drossel (38, 37, 33, 35) ist so dimensioniert, daß nach Abriß der Anhänger-Bremsleitung der Druck in der Vorratsleitung zum Anhänger innerhalb von zwei Sekunden nach dem Betätigen des Motorwagen-Bremsventils auf einen vorgegebenen Wert, z. B. 1,5 bar nach ECE abgesunken ist. Da das am Anhängerfahrzeug angeordnete Anhänger-Bremsventil so aufgebaut ist, daß es durch einen Druckabfall der genannten Art in der Anhänger-Vorratsleitung automatisch in einen eine Anhänger-Bremsung auslösenden Betriebszustand umgeschaltet wird, führt der oben unterstellte Abriß der Anhänger-Bremsleitung bei einer Betriebsbremsung des Motorfahrzeugs zur Zwangsbremsung des Anhängerfahrzeugs.

Die das Drosselglied (52, 48) der zweiten Drossel (52, 48, 47, 46) in Richtung auf den Steuerkolben (41, 49) zu belastende Feder (56) ist so ausgelegt, daß sie auch dann den Steuerkolben (41, 49) bewegt, wenn in der Steuerkammer (2) des Anhängersteuerventils nur ein geringer Steuerdruck vorhanden ist und der Druck in der ersten Steuerkammer (26) der Drosseleinrichtung bedingt durch Luftverbrauch bei Belüftung der Bremsleitung über den Druckmittelanschluß (62) kurzzeitig abgesunken ist. Die überschüssige Kraft der Feder (56) wird dann beim Schließen der zweiten Drossel (47, 52) am Sitz des Gehäuses (46) (Gehäusewand) abgefangen, so daß keine weitere Bewegung der ersten Drossel (38, 37, 33, 35) im Sinne einer Verringerung des Durchlaßquerschnittes mehr erfolgt. Damit erfolgt eine ständige Spielbewegung des Steuerkolbens (41, 49) bei jeder Betriebsbremsung.

Bei unbetätigter Betriebsbremse des Zugfahrzeugs wird der Steuerkolben (41, 49) vom Druckmittel in der ersten Steuerkammer (26) der Drosseleinrichtung am Anschlag (50) gehalten. Das zweite Drosselglied (52, 48) liegt dabei an dem deckelartigen Teil (45) des Steuerkolbens (41, 49) an und wird von der das zweite Drosselglied (52, 48) beaufschlagenden Druckfeder (56) an diesem gehalten. In dieser Stellung haben die erste Drossel (38, 37, 33, 35) und die zweite Drossel (52, 48, 46, 47) ihren größten Durchlaßquerschnitt.

Die in der ersten Steuerkammer (26) angeordnete Feder (25) ist in ihrer axialen Erstreckung so bemessen, daß der Steuerkolben (41, 49) keinen Kontakt mit ihr hat, wenn er am Anschlag (50) anliegt. In Abhängigkeit von den Druckschwankungen in der ersten Steuerkammer (26), verursacht durch Druckschwankungen in der Druckmitteleingangskammer (59, 15) beim Öffnen und Schließen des Einlaßventils (11, 12) des kombinierten Einlaß- und Auslaßventils (11, 12, 8), führt der Steuerkolben (41, 49) kurze Hübe aus, welche jedoch keine derartige Verringerung des Durchlaßquerschnittes des Durchlasses (35) der ersten Drossel (38, 37, 33, 35) verursachen, daß eine wirksame Drosselung des zur ersten Steuerkammer (26) hin strömenden Druckmittels erreicht werden würde. Ein ungewolltes Drosseln des in die erste Steuerkammer (26) der Drosseleinrichtung und in die Druckmitteleingangskammer (59, 15) des Anhänger-Steuerventils strömenden Druckmittels ist somit ausgeschlossen.

Da bedingt durch die zweite Drossel (52, 48) sich der Druck in der zweiten Steuerkammer (60, 43) nur relativ langsam aufbauen kann, ist gewährleistet, daß bei einer normalen Betriebsbremsung die auf den Steuerkolben (41, 49) einwirkende Kraft des Druckes in der zweiten Steuerkammer (60, 43) im Verlaufe der Betriebsbremsung nicht so groß werden kann, daß die vom Druckmittel in der ersten Steuerkammer (26) auf den Steuerkolben (41, 49) entgegengerichtet einwirkende Kraft überwunden wird.

Wenn die Bremsanlage des Zugfahrzeugs mit einem höheren Druck betrieben wird als die Bremsanlage des Anhängerfahrzeugs, z. B. Druckmittelkreise mit unterschiedlichem Druckniveau, ist es aus vorstehenden Gründen ausgeschlossen, daß die erste Drossel (38, 37, 33, 35) bei intakter Anhänger-Bremsleitung in eine Schaltstellung gelangt, in der sie den Zustrom von Vorratsdruckmittel zur ersten Steuerkammer (26) der Drosseleinrichtung und somit zur Druckmitteleingangskammer (59, 15) des Anhänger-Steuerventils drosselt.

Dadurch, daß der Steuerkolben (41, 49) von der Druckfeder (56) im Sinne einer Verringerung des Durchlaßquerschnittes der ersten Drossel (38, 37, 33, 35) belastet wird, ist sichergestellt, daß bei einem Defekt an der Anhänger-Bremsleitung und somit bei einem Druckabfall in der ersten Steuerkammer (26) unter ein vorbestimmtes Niveau das Drosselglied (38, 37) der ersten Drossel (38, 37, 33, 35) in eine Lage gebracht wird, in welcher die erste Drossel (38, 37, 33, 35) ihren kleinsten Durchlaßquerschnitt hat, auch dann, wenn der Druck in der Steuerkammer (2) des Anhänger-Steuerventils und somit der Druck in der zweiten Steuerkammer (60, 43) der Drosseleinrichtung relativ niedrig ist.

Die zweite Drossel kann auch als Konstantdrossel ausgebildet sein, wobei dann im Drosselglied selbst der Durchlaß für das Druckmittel vorgesehen ist.

Bei entsprechender Auslegung der einander entgegengerichteten Wirkflächen des Steuerkolbens (41, 49) kann auf die Anordnung von mit dem Steuerkolben (41, 49) zusammenwirkenden Federn (56, 25) verzichtet werden.

Gemäß dem Ausführungsbeispiel ist die Drosseleinrichtung in das Gehäuse des Anhänger-Steuerventils integriert. Es ist aber auch möglich die Drosseleinrichtung in einem separaten Gehäuse vorzusehen und die Gehäusekanäle (58 und 57) durch Druckmittelleitungen zu ersetzen. Desgleichen ist es möglich die erste Drossel und die zweite Drossel in separaten Gehäusen anzuordnen und die erforderlichen Druckmittelverbindungen durch Druckmittelleitungen herzustellen.

Im Ausführungsbeispiel dienen der Gehäusekanal (57) und die im Gehäuse (53) vor der zweiten Drossel (46, 47, 48, 52) gelegene Kammer (55) als Verbindungsleitung (55, 57) zur Verbindung der Steuerkammer (2) für den Relaiskolben (3, 5) mit der zweiten Steuerkammer (60, 43) für den Steuerkolben (41, 49) der Drosseleinrichtung. Als zweite Steuerkammer (60, 43) werden der Raum (60) hinter der zweiten Drossel (46, 47, 48, 52) und der als Zusatzvolumen (43) dienende, im Steuerkolben (41, 49) angeordnete Raum bezeichnet. Es ist natürlich auch denkbar, die zweite Drossel im Gehäusekanal (57) oder in einer von der Steuerkammer (2) für den Relaiskolben (3, 5) zu der aus einem einzigen Raum bestehenden zweiten Steuerkammer für den Steuerkolben (41, 49) führenden Druckmittelleitung anzuordnen.

Das Zusatzvolumen (43) kann, wie im Ausführungsbeispiel gezeigt, platzsparend im Steuerkolben (41, 49) angeordnet sein, es kann aber auch außerhalb des Bereiches der Wirkfläche des Steuerkolbens (41, 49) im oder am Gehäuse angeordnet sein, wobei es auch dann als ein Teil der zweiten Steuerkammer anzusehen ist.

Die erste Steuerkammer (26) der Drosseleinrichtung kann mit der Druckmitteleingangskammer (59, 15) des Anhänger-Steuerventils, und/oder mit der Vorratsleitung (40) des Zugfahrzeugs, und/oder mit der Anhänger-Bremsleitung verbunden sein.

Das Ansprechverhalten der Drosseleinrichtung wird besonders günstig beeinflußt, wenn der Durchlaßquerschnitt des mit der Vorratsleitung des Zugfahrzeugs verbundenen Druckmittelanschlusses (40) maximal halb so groß ist wie der Durchlaßquerschnitt des mit der Anhänger-Bremsleitung verbundenen Druckmittelanschlusses (63) und der Durchlaßquerschnitt des mit der Anhänger-Vorratsleitung verbundenen Druckmittelanschlusses (64) mindesten gleich dem Durchlaßquerschnitt der Anhänger-Vorratsleitung ist.

## Patentansprüche

1. Anhänger-Steuerventil für eine druckluftbetätigte Zweileitungs-Bremsanlage mit einer zwischen dem Zugfahrzeug und dem Anhängerfahrzeug angeordneten Anhänger-Vorratsleitung und mit einer ebenfalls zwischen dem Zugfahrzeug und dem Anhängerfahrzeug angeordneten Anhänger-Bremsleitung mit folgenden Merkmalen:
a) es ist eine Druckmittelausgangskammer (10) zur Speisung der Anhänger-Bremsleitung vorgesehen;
b) die Druckmittelausgangskammer (10) ist über ein kombiniertes Einlaß- und Auslaßventil (11, 12, 8) mit einer Druckmitteleingangskammer (59, 15) oder mit der Atmosphäre verbindbar;
c) zur Betätigung des kombinierten Einlaß- und Auslaßventils (11, 12, 8) ist wenigstens ein von einem Steuerdruck in einer Steuerkammer (2) beaufschlagbarer Relaiskolben (3, 5) vorgesehen;
d) die Druckmitteleingangskammer (59, 15) ist über eine aus einer ungedrosselten Betriebsstellung heraus zu kleineren Durchlaßquerschnitten hin veränderbare erste Drossel (38, 37, 33, 35) mit einer Vorratsleitung des Zugfahrzeuges verbunden;
e) die Anhänger-Vorratsleitung ist über die erste Drossel (38, 37, 33, 35) mit der Vorratsleitung (40) des Zugfahrzeugs verbunden;
f) zur Betätigung der ersten Drossel (38, 37, 33, 35) ist ein auf seinen beiden Seiten über je eine Steuerkammer (43, 60, 26) mit Druckmittel beaufschlagbarer Steuerkolben (41, 49) vorgesehen, wobei die zweite Steuerkammer (43, 60) über eine Verbindungsleitung (55, 57) mit der Steuerkammer (2) für den Relaiskolben (3, 5) verbunden ist und dessen erste Steuerkammer (26) mit der Druckmitteleingangskammer (59, 15) und/oder mit der Vorratsleitung (40) des Zugfahrzeugs und/oder mit der Anhänger-Bremsleitung verbunden ist, wobei das Druckmittel in der zweiten Steuerkammer (43, 60) auf den Steuerkolben (41, 49) eine Kraft ausübt, die in Richtung einer Verkleinerung des Durchlaßquerschnittes der ersten Drossel (38, 37, 33, 35) wirkt;
dadurch gekennzeichnet, daß in der Verbindungsleitung (55, 57) zwischen der zweiten Steuerkammer (43, 60) für den Steuerkolben (41, 49) und der Steuerkammer (2) für den Relaiskolben (3, 5) eine zweite Drossel (46, 47, 48, 52) angeordnet ist.

2. Anhänger-Steuerventil nach Anspruch 1, dadurch gekennzeichnet, daß eine Druckfeder (56) vorgesehen ist, welche den Steuerkolben (41, 49) direkt oder indirekt im Sinne einer Verringerung des Durchlaßquerschnittes des Durchlasses (35) der ersten Drossel (38, 37, 33, 35) belastet.

3. Anhänger-Steuerventil nach Anspruch 1, dadurch gekennzeichnet, daß eine als Zusatzvolumen dienende Kammer (43) vorgesehen ist, die mit der zweiten Steuerkammer (60) in Verbindung steht.

4. Anhänger-Steuerventil nach Anspruch 1, dadurch gekennzeichnet, daß die zweite Drossel (52, 48, 47, 46) als eine aus einer ungedrosselten Betriebsstellung heraus zu kleineren Duchlaßquerschnitten hin veränderbare Drossel ausgebildet ist.

5. Anhänger-Steuerventil nach wenigstens einem der vorhergehenden Ansprüche, dadurch gekennzeichnet, daß die erste Drossel (38, 37, 33, 35) und die zweite Drossel (52, 48, 47, 46) koaxial zueinander und hintereinander liegend angeordnet sind.

6. Anhänger-Steuerventil nach wenigstens einem der vorhergehenden Ansprüche, gekennzeichnet durch die folgenden Merkmale:
a) die zweite Drossel (52, 48, 46, 47) wird von einem bewegbar angeordneten Drosselglied (52, 48) und einem in dem das Drosselglied (52, 48) aufnehmenden Gehäuse vorgesehenen gehäusefesten Vorsprung (46) gebildet;
b) das Drosselglied (52, 48) der zweiten Drossel (52, 48, 47, 46) ist so ausgebildet und so zum Steuerkolben (41, 49) angeordnet, daß es über den gesamten Weg von der ungedrosselten Betriebsstellung heraus zur gedrosselten Stellung und umgekehrt mit dem Steuerkolben (41, 49) in Wirkverbindung steht.

7. Anhänger-Steuerventil nach Anspruch 1, dadurch gekennzeichnet, daß ein mit der Vorratsleitung des Zugfahrzeugs verbundener Druckmittelanschluß (40), ein mit der Anhänger-Bremsleitung verbundener Druckmittelanschluß (63) und ein mit der Anhänger-Vorratsleitung verbundener Druckmittelanschluß (64) vorgesehen ist, wobei der Durchlaßquerschnitt des mit der Vorratsleitung des Zugfahrzeugs verbundenen Druckmittelanschlusses (40) maximal halb so groß ist wie der Durchlaßquerschnitt des mit der Anhänger-Bremsleitung verbundenen Druckmittelanschlusses (63) und daß der Durchlaßquerschnitt des mit der Anhänger-Vorratsleitung verbundenen Druckmittelanschlusses (64) mindestens gleich dem Durchlaßquerschnitt der Anhänger-Vorratsleitung ist.

## Claims

1. Trailer control valve for a compressed-air-operated dual line brake system having a trailer supply line arranged between the towing vehicle and the trailer vehicle and a trailer brake line arranged likewise between the towing vehicle and the trailer vehicle, with the following features:
a) a pressure medium output chamber (10) for supplying the trailer brake line is provided;
b) the pressure medium output chamber (10) is to be connected by way of a combined inlet and outlet valve (11, 12, 8) to a pressure medium input chamber (59, 15) or to the atmosphere;
c) to operate the combined inlet and outlet valve (11, 12, 8) at least one relay piston (3, 5) acted upon by a control pressure in a control chamber (2) is provided;
d) the pressure medium input chamber (59, 15) is connected to a supply line of the towing vehicle by way of a first throttle (38, 37, 33, 35) changeable from an unthrottled operating position to smaller opening cross-sections;
e) the trailer supply line is connected by way of the first throttle (38, 37, 33, 35) to the supply line (40) of the towing vehicle;
f) to operate the first throttle (38, 37, 33, 35) a control piston (41, 49) pressurizable with pressure medium on both of its sides by way of respective control chambers (43, 60, 26) is provided, wherein the second control chamber (43, 60) is connected by way of a connecting line (55, 57) to the control chamber (2) for the relay piston (3, 5) and the first control chamber (26) thereof is connected to the pressure medium input chamber (59, 15) and/or to the supply line (40) of the towing vehicle and/or to the trailer brake line, wherein the pressure medium in the second control chamber (43, 60) exerts on the control piston (41, 49) a force that is effective in reducing the opening cross-section of the first throttle (38, 37, 33, 35);
characterised in that in the connecting line (55, 57) between the second control chamber (43, 60) for the control piston (41, 49) and the control chamber (2) for the relay piston (3, 5) there is arranged a second throttle (46, 47, 48, 52).

2. Trailer control valve according to claim 1, characterised in that a pressure spring (56) is provided, which biasses the control piston (41, 49) directly or indirectly so that the opening cross-section of the opening (35) of the first throttle (38, 37, 33, 35) is reduced.

3. Trailer control valve according to claim 1, characterised in that a chamber (43) serving as extra volume is provided, which is in connection with the second control chamber (60).

4. Trailer control valve according to claim 1, characterised in that the second throttle (52, 48, 47, 46) is in the form of a throttle changeable from an unthrottled operating position to smaller opening cross-sections.

5. Trailer control valve according to at least one of the preceding claims, characterised in that the first throttle (38, 37, 33, 35) and the second throttle (52, 48, 47, 46) are arranged coaxially with respect to one another and lying one behind the other.

6. Trailer control valve according to at least one of the preceding claims, characterised by the following features:
a) the second throttle (52, 48, 46, 47) is formed by a movably arranged throttle member (52, 48) and a projection (46) provided in and integral with the housing receiving the throttle member (52, 48);
b) the throttle member (52, 48) of the second throttle (52, 48, 47, 46) is so constructed and so arranged with respect to the control piston (41, 49) that it is in operative connection with the control piston (41, 49) over the entire path from the unthrottled operating position to the throttled position and vice versa.

7. Trailer control valve according to claim 1, characterised in that a pressure medium connection (40) connected to the supply line of the towing vehicle, a pressure medium connection (63) connected to the trailer brake line and a pressure medium connection (64) connected to the trailer supply line are provided, wherein the opening cross-section of the pressure medium connection (40) connected to the supply line of the towing vehicle is at most half the size of the opening cross-section of the pressure medium connection (63) connected to the trailer brake line, and the opening cross-section of the pressure medium connection (64) connected to the trailer supply line is at least the same as the opening cross-section of the trailer supply line.

## Revendications

1. Valve de commande de remorque destinée à un système de freinage à air comprimé et à deux conduites, comprenant une conduite d'alimentation de remorque agencée entre le véhicule tracteur et le véhicule remorqué et une conduite de frein de remorque, agencée également entre le véhicule tracteur et le véhicule remorqué, ayant les particularités suivantes:
a) elle comporte une chambre de sortie de fluide de pression (10) pour alimenter la conduite de frein de remorque;
b) la chambre de sortie (10) peut être reliée à travers une soupape combinée d'admission et d'échappement (11, 12, 8) à une chambre d'entrée de fluide de pression (59, 15) ou à l'atmosphère;
c) pour l'actionnement de la soupape combinée d'admission et d'échappement (11, 12, 8), elle comporte au au moins un piston relais (3, 5) auquel est applicable une pression de commande régnant dans une chambre de commande (2);
d) la chambre d'entrée (59, 15) est reliée à une conduite d'alimentation du véhicule tracteur à travers un premier étrangleur (38, 37, 33, 35) pouvant être amené d'une position de service sans étranglement à des sections de passage plus petites;
e) la conduite d'alimentation de remorque est reliée à travers le premier étrangleur (38, 37, 33, 35) à la conduite d'alimentation (40) du véhicule tracteur;
f) pour l'actionnement du premier étrangleur (38, 37, 33, 35), elle comporte un piston de commande (41, 49), aux deux côtés duquel est applicable du fluide de pression, chaque fois à travers une chambre de commande (43, 60, 26), la seconde chambre de commande (43, 60) étant reliée par une conduite de liaison (55, 57) à la chambre de commande (2) du piston relais (3, 5) et sa première chambre de commande (26) étant reliée à la chambre d'entrée (59, 15) et/ou à la conduite d'alimentation (40) du véhicule tracteur et/ou à la conduite de frein de remorque, le fluide de pression dans la seconde chambre de commande (43, 60) exerçant sur le piston de commande (41, 49) une force agissant dans le sens d'une diminution de la section de passage du premier étrangleur (38, 37, 33, 35);
caractérisée en ce qu'un second étrangleur (46, 47, 48, 52) est disposé dans la conduite de liaison (55, 57) entre la seconde chambre de commande (43, 60) du piston de commande (41, 49) et la chambre de commande (2) du piston relais (3, 5).

2. Valve de commande de remorque selon la revendication 1, caractérisée en ce qu'elle comporte un ressort de compression (56) qui charge le piston de commande (41, 49) directement ou indirectement dans le sens d'une diminution de la section du passage (35) du premier étrangleur (38, 37, 33, 35).

3. Valve de commande de remorque selon la revendication 1, caractérisée en ce qu'elle comporte une chambre (43) servant de volume supplémentaire et communiquant avec la seconde chambre de commande (60).

4. Valve de commande de remorque selon la revendication 1, caractérisée en ce que le second étrangleur (52, 48, 47, 46) est réalisé comme un étrangleur pouvant être amené à partir d'une position de service sans étranglement à des sections de passage plus petites.

5. Valve de commande de remorque selon au moins une des revendications précédentes, caractérisée en ce que le premier étrangleur (38, 37, 33, 35) et le second étrangleur (52, 48, 47, 46) sont disposés coaxialement et l'un derrière l'autre.

6. Valve de commande de remorque selon au moins une des revendications précédentes, caractérisée en ce que:
a) le second étrangleur (52, 48, 46, 47) est formé par un élément d'étranglement (52, 48) disposé mobile et par une saillie (46) prévue à l'intérieur et solidaire d'un corps recevant cet élément d'étranglement;
b) l'élément d'étranglement (52, 48) du second étrangleur (52, 48, 47, 46) est réalisé et disposé, par rapport au piston de commande (41, 49), de manière qu'il soit en liaison fonctionnelle avec ce piston sur toute la course entre la position de service sans étranglement et la position étranglée et inversement.

7. Valve de commande de remorque selon la revendication 1, caractérisée en ce qu'elle comporte un raccord de fluide de pression (40) relié à la conduite d'alimentation du véhicule tracteur, un raccord de fluide de pression (63) relié à la conduite de frein de remorque et un raccord de fluide de pression (64) relié à la conduite d'alimentation de remorque, la section de passage du raccord (40) relié à la conduite d'alimentation du véhicule tracteur correspondant tout au plus à la moitié de la section de passage du raccord (63) relié à la conduite de frein de remorque, et la section de passage du raccord (64) relié à la conduite d'alimentation de remorque étant au moins égale à la section de passage de la conduite d'alimentation de remorque.
